# EUROPÄISCHE PATENTSCHRIFT

(11) **EP 0 859 890 B1**
(45) Veröffentlichungstag und Bekanntmachung des Hinweises auf die Patenterteilung: **02.01.2004**
(21) Anmeldenummer: 96938973.3
(22) Anmeldetag: 07.11.1996
(51) Int. Cl.: E03C 1/04, F16K 11/078, F16K 27/04

(54) **SANITÄRARMATUR**
SANITARY TAP
ROBINET A USAGE SANITAIRE

(30) Priorität: 09.11.1995 DE 19541738; 22.05.1996 AT 90496
(43) Veröffentlichungstag der Anmeldung: 26.08.1998
(73) Patentinhaber: IDEAL-STANDARD GMBH, 53121 Bonn (DE)
(72) Erfinder: KOCH, Wilhelm, D-53539 Bongard (DE); SPONHEIMER, Jürgen, D-54524 Klausen (DE); BECKER, Albert, D-54516 Wittlich (DE)
(74) Vertreter: Müller, Karl-Ernst, Dr., Dipl.-Ing.
(86) Internationale Anmeldenummer: PCT/DE1996/002146
(87) Internationale Veröffentlichungsnummer: WO 1997/017501

(56) Entgegenhaltungen:
- EP-A- 0 681 127
- DE-A- 3 513 840
- DE-A- 3 707 705
- DE-A- 3 811 357
- DE-U- 9 304 056

## Beschreibung

Die Erfindung betrifft eine Sanitärarmatur
mit einer Kartusche, einem dichtend an der Kartusche anliegenden, vorzugsweise aus Kunststoff bestehenden Einsatz und mit zwei mit zugeordneten Eintrittsöffnungen im Einsatz kommunizierenden Wasserzuleitungen, wobei an dem Einsatz an dessen der Kartusche abgewandter Seite ein die beiden Eintrittsöffnungen umgebender Ansatz ausgebildet und die Wasserzuleitungen in dem Ansatz mittels eines seitlich in den Ansatz einschiebbaren und die beiden Wasserleitungen im Formschluß in dem Ansatz festlegenden Betätigungsmittels festgelegt und gehalten sind.

Eine Sanitärarmatur mit den vorgenannten Merkmalen ist aus der DE-A-3 513 840 bekannt. Die darin beschriebene Armatur weist ein der Befestigung der Wasserzuleitungen dienendes und in dem Armaturengehäuse festzulegendes Einsatzstück auf. Dieses Einsatzstück ist mit einer schlitzförmigen Querausnehmung versehen, deren Breite etwas größer ist als der Abstand der in das Einsatzstück eingeführten Wasserzuleitungen. Als Befestigungsmittel dient ein in die Querausnehmung einzuführender Querriegel, der seinerseits keilförmig zugespitzt ist, und dessen Breite gleichzeitig etwas größer ist als der Querabstand der in dem Einsatzstück liegenden Wasserzuleitungen. Zur Befestigung der Wasserzuleitungen wird der Querriegel zwischen die Anschlußleitungen eingetrieben, wobei er an diesen mit seinen äußeren Rändern Eindellungen erzeugt, so daß die Wasserzuleitungen in dem Einsatzstück unverrückbar festgelegt sind. Der eingetriebene Querriegel wird in dieser Befestigungslage dadurch gesichert, daß eine der Befestigung der Armatur dienende Sechskantmutter in einen sich insoweit erweiternden Teil der Querausnehmung eingelegt und bei befestigter Armatur verspannt ist.

Der Erfindung liegt daher die Aufgabe zugrunde, bei einer Sanitärarmatur mit den gattungsgemäßen Merkmalen die Befestigung der Wasserzuleitungen weiter zu vereinfachen.

Diese Aufgabe wird im wesentlichen dadurch gelöst, daß der hülsenförmige'Ansatz einen achtförmigen Querschnitt zur Aufnahme je einer Wasserzuleitung aufweist und das Befestigungsmittel als ein U-förmiger Federstecker ausgebildet ist, welcher mit seinen Schenkeln den Ansatz durchsetzt und in an den Wasserzuleitungen in deren bei in den Ansatz eingeschobenen Wasserzuleitungen die Wasserleitungen gemeinsam umschließenden Bereich des Ansatzes befindlichen Ringnuten eingerastet ist und die Schenkel des Federsteckers durch den Ansatz in Raststellung mit den Ringnuten der Wasserzuleitungen gehalten sind.

Aus der DE-A-3 707 705 ist es dabei bereits bekannt, zur Verbindung einer Wasserzuleitung mit einem aus einer Armatur herausführenden Ansatzrohr an dem Ansatzrohr sowie an der Wasserzuleitung jeweils ein Adapterstück vorzusehen und die ineinander schiebbaren Adapter mittels eines U-förmigen Haltegliedes aneinander festzulegen.

Mit der Erfindung ist der Vorteil verbunden, daß sich der Federstecker einfach durch Öffnungen in dem Ansatz einstecken läßt, so daß eine einfache, rasche und daher billige Montage Freiheit gegeben ist. Zusätzlich ermöglicht diese Befestigungsform nach der Befestigung Rotationsfreiheit der Wasserzuleitungen, so daß diese ohne Verwindung mit ihrem anderen Ende an zum Beispiel eine Wasserleitung angeschraubt werden können. Die über den Federstecker hergestellte Verbindung ist auch jederzeit einfach wieder lösbar, indem der Federstecker aus dem Ansatz herausgezogen wird. Mit der Erfindung können auch mittels eines einzigen Federsteckers aufgrund des achtförmigen Ansatzes beide Wasserzuleitungen in den gemeinsamen Ansatz festgelegt werden, so daß nur ein einziger Montagevorgang für die Verbindung beider Zuleitungen erforderlich ist. Dadurch, daß der Federstecker mit seinen Schenkeln in der Wandung des Ansatzes gelegen ist und dadurch die Schenkel durch den Ansatz in ihrer Raststellung mit den Ringnuten der Wasserzuleitungen gehalten sind, ist die hergestellte Montageverbindung auch dauerhaft.

In der Zeichnung ist ein Ausführungsbeispiel der Erfindung wiedergegeben, welches nachstehend beschrieben ist; es zeigen:
- Fig. 1: eine Sanitärarmatur in einem Teilschnitt,
- Fig. 2: einen Schnitt nach Schnittlinie II - II in Figur 1.

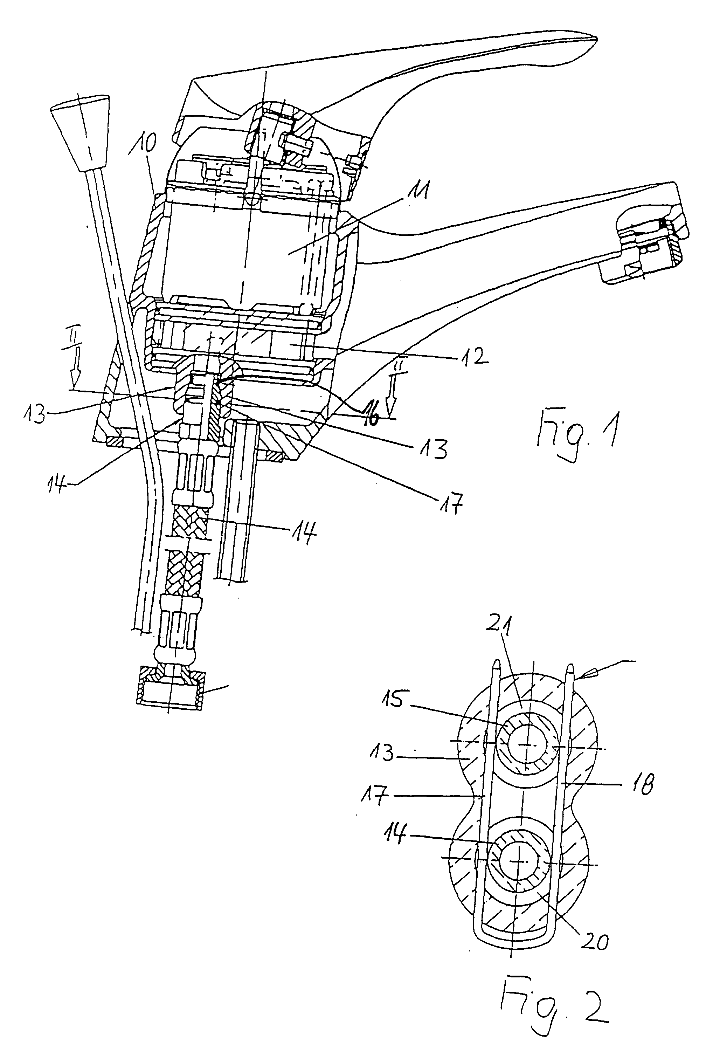

Wie sich aus Figur 1 ergibt, ist in einem Armaturengehäuse einer sanitären Wasserleitungsarmatur eine Kartusche 11 und ein daran anschließender Kunststoffeinsatz 12 mit angeformtem Ansatz 13 angeordnet. Im Ansatz 13 ist ein bei diesem Ausführungsbeispiel flexibler Wasserzuleitungsschlauch 14 befestigt, wobei zwischen der Zuleitung 14 und dem Ansatz 13 eine Dichtung 16 vorgesehen ist.

Wie aus Figur 2 besser ersichtlich, hat der Ansatz 13 einen achtförmigen Querschnitt, und es sind zwei Wasserzuleitungen 14, 15 darin befestigt. Als Befestigungsmittel ist ein Federstecker 17 vorgesehen, der durch Öffnungen im Ansatz 13 seitlich einsteckbar ist und in Nuten 20, 21, die in den Wasserzuleitungen 14, 15 vorgesehen sind, mit seinen Schenkeln 18 einrastet. Es ergibt sich eine sichere, feste Verbindung, die einen geringen Montageaufwand erfordert und lösbar ist und zusätzlich den Vorteil bietet, daß die Zuleitungen 14, 15 um ihre Längsachse rotieren können, so daß das andere Ende der Zuleitungen jeweils an eine Wasserleitung anschraubbar ist, ohne daß es zu einem Verwinden der jeweiligen Wasserzuleitung 14, 15 kommt.

## Patentansprüche

1. Sanitärarmatur mit einer Kartusche (11), einem dichtend an der Kartusche (11) anliegenden, vorzugsweise aus Kunststoff bestehenden Einsatz (12) und mit zwei mit einer zugeordneten Eintrittsöffnung im Einsatz (12) kommunizierenden Wasserzuleitungen (14, 15), wobei an dem Einsatz (12) an dessen der Kartusche (11) abgewandten Seite ein die Eintrittsöffnung umgebender Ansatz (13) ausgebildet und die Wasserzuleitungen (14, 15) in den Ansatz (13) mittels eines seitlich in den Ansatz (13) einschiebbaren und die beiden Wasserzuleitungen (14, 15) im Formschluß in dem Ansatz (13) festlegenden Befestigungsmittels festgelegt und gehalten sind, **dadurch gekennzeichnet, daß** der hülsenförmige Ansatz (13) einen achtförmigen Querschnitt zur Aufnahme der beiden Wasserzuleitungen (14, 15) aufweist und das Befestigungsmittel als ein einziger U-förmiger Federstecker (17) ausgebildet ist, welcher mit seinen Schenkeln (18) den Ansatz (13) durchsetzt, wobei die Schenkel (18) die Wasserzuleitungen umschließen und in Ringnuten (20, 21) eingerastet sind, welche an der Wasserzuleitungen Vorgesehen sind und sich bei eingeschobenen Wasserzuleitungen in einem durch den Ansatz (13) umgebenen Bereich gefinden.

## Claims

1. Sanitary fitting having a cartridge (11), an insert (12) adjoining said cartridge (11) in a sealing manner and preferably consisting of plastic, and two water feed lines (14, 15) communicating with an associated inlet aperture in said insert (12), wherein an extension (13) surrounding the inlet aperture is constructed on the insert (12), on its side that faces away from the cartridge (11), and the water feed lines (14, 15) are secured in position and retained in the extension (13) by means of a fastening means that can be inserted laterally in said extension (13) and secures the two water feed lines (14, 15) in position in the latter in a form-locking connection, **characterised in that** the sleeve-shaped extension (13) has a figure-eight-shaped cross-section for receiving the two water feed lines (14, 15), and the fastening means is constructed as a single U-shaped spring plug (17) that passes through said extension (13) with its legs (18), said legs (18) enclosing the water feed lines and being locked into place in annular grooves (20, 21) which are provided on the water feed lines and which, when the latter are inserted, are located in a region surrounded by the extension (13).

## Revendications

1. Robinet sanitaire avec une cartouche (11), une garniture de joint (12) de préférence en matière plastique, adjacente de manière étanche à la cartouche (11) et avec deux conduites d'amenée d'eau (14, 15) communiquant avec une ouverture d'admission agencée dans la garniture de joint (12), un épaulement (13) entourant l'ouverture d'admission étant formé au niveau de la garniture de joint (12) sur le côté opposé à la cartouche (11) et les conduites d'amenée d'eau (14, 15) étant fixées et maintenues dans l'épaulement (13) par un moyen de fixation insérable latéralement dans l'épaulement (13) et fixant les deux conduites d'amenée d'eau (14, 15) par conjugaison de forme dans l'épaulement (13), **caractérisé en ce que** l'épaulement (13) en forme de douille présente une coupe transversale octogonale pour recevoir les deux conduites d'amenée d'eau (14, 15), et le moyen de fixation est conçu sous forme de broche (17) unique en forme de U, dont les branches (18) passent à travers l'épaulement (13), les branches (18) entourant les conduites d'amenée d'eau et étant enfichées dans des rainures annulaires (20, 21), qui sont prévues au niveau des conduites d'amenée d'eau et qui, lorsque les conduites d'amenée d'eau sont insérées, sont disposées dans une zone entourée par l'épaulement (13).
